# EUROPÄISCHE PATENTSCHRIFT

(11) **EP 2 024 456 B1**
(45) Veröffentlichungstag und Bekanntmachung des Hinweises auf die Patenterteilung: **22.09.2010**
(21) Anmeldenummer: 07729197.9
(22) Anmeldetag: 16.05.2007
(51) Int. Cl.: C09J 7/00

(54) **VERWENDUNG EINER HALOGENFREIEN FOLIE IN EINEM ABDECKKLEBEBAND, WOBEI DIE FOLIE DURCH ELEKTRONENSTRAHLENBESTRAHLUNG QUEREINREISSBAR IST**
USE OF A HALOGEN-FREE FILM IN AN ADHESIVE MASKING TAPE, THE FILM BEING TEARABLE TRANSVERSELY AS A RESULT OF ELECTRON BEAM IRRADIATION
UTILISATION D'UNE FEUILLE SANS HALOGÈNE DANS UNE BANDE ADHÉSIVE MASQUANTE, LA FEUILLE POUVANT ÊTRE DÉCHIREÉ TRANSVERSALEMENT PAR IRRADIATION AVEC UN FAISCEAU D'ÉLECTRONS

(30) Priorität: 18.05.2006 DE 102006023743
(43) Veröffentlichungstag der Anmeldung: 18.02.2009
(73) Patentinhaber: TESA SE, 20253 Hamburg (DE)
(72) Erfinder: BÖHM, Nicolai, 20357 Hamburg (DE); KRUPKE, Siegfried, 25436 Tornesch (DE)
(86) Internationale Anmeldenummer: PCT/EP2007/054749
(87) Internationale Veröffentlichungsnummer: WO 2007/135050

(56) Entgegenhaltungen:
- WO-A-02/086005
- WO-A-2005/037906
- US-A1- 2005 287 361

## Beschreibung

Die Erfindung betrifft die Verwendung einer halogenfreien Folie in einem Abdeckklebeband, wobei die Folie durch Elektronenstrahlenbestrahlung quereinreißbar ist, insbesondere in einem Abdeckklebeband oder in einer Abdeckklebefolie (im Folgenden umfasst der Begriff (Abdeck)klebeband auch (Abdeck)klebefolien) für Maskierzwecke zur Erzielung von zweifarbig gestalteten Gegenständen, bei der mindestens ein Bereich des Gegenstandes durch Maskieren mit dem Abdeckklebeband vom Lackieren ausgespart und dabei gleichzeitig eine scharfe Trennlinie zwischen lackiertem und nicht lackiertem Bereich erzielt wird.

Die zweifarbige Gestaltung von Fahrzeugen und besonders Fahrzeuganbauteilen ist ein häufig verwendetes Designelement. Eine seit vielen Jahren etablierte Methode zur Erzeugung derselben ist das Maskieren mit Abdeckbändern. Da häufig Kunststoffteile, insbesondere Kunststoffstoßfänger zweifarbig gestaltet werden, die sich bei den Trocknungstemperaturen der aufgetragenen Lacke von bis zu 150 °C erheblich ausdehnen, sind diese Bänder in der Regel aus einem Weich-PVC-Träger und einer einseitig darauf aufgebrachten Selbstklebemasse aufgebaut. Diese folgen, anders als die für Lackierzwecke sonst üblichen Papierbänder, der thermischen Ausdehnung, wogegen Papier in der Ofenhitze wegen der Austrocknung sogar zum Schrumpf neigt.

Die heute gebräuchlichen Weich-PVC-Bänder sind auch an gekrümmte Substratkonturen anschmiegsam, überstehen die üblichen Vorbehandlungen der Kunststoffteile vor dem Lackieren wie der druckvollen Grundreinigung mit heißen Waschlösungen ("Powerwash") und der Vorbehandlung des gereinigten Kunststoffsubstrates mit offenen Flammen zur Verbesserung der Lackhaftung auf dem Substrat. Wie bereits erwähnt, folgen sie problemlos der zum Teil erheblichen Ausdehnung des Substrates während der Lacktrocknung und lassen sich nach Abkühlung des Substrates problemlos ohne Reißen entfernen.

Der wesentliche Nachteil von Weich-PVC-Klebebändern ist deren schwierige Entsorgung. Wegen der den Abdeckbändern anhaftenden Selbstklebemasse und der aufgesprühten Lackreste sind solche Weich-PVC-Klebebänder nicht sortenrein recycelbar, sie müssen also unter aufwändigen und kostenintensiven Rahmenbedingungen verbrannt werden, um zum einen die Gefahr der Dioxinbildung einzudämmen und zum anderen das Rauchgas von dem gebildeten Chlorwasserstoffgas zu reinigen.

Klebebänder auf Basis einer Weich-PVC-Folie werden zum Beispiel in der GB 2,171,712 A beschrieben. Konventionelle Weich-PVC-Klebebänder enthalten einen Anteil von größer 37 Gewichtsteilen eines Monomerweichmachers auf Phthalatbasis auf 100 Gewichtsteile des regelmäßig unvernetzten PVC-Polymers. Diese Weich-PVC-Klebebänder haben dann üblicherweise eine zu hohe Reißkraft und Reißdehnung, so dass ein Abreißen des Abdeckklebebandes ohne technische Hilfsmittel wie Scheren oder Messer nur schwer möglich ist.

Aus der DE 102 18 686 A1 ist eine Folie mit leichter Handeinreißbarkeit und guter Dehnbarkeit bekannt. Die Folie enthält 2 bis 25 Gewichtsteile eines additiven Polymers, in Form eines in sich vernetzten oder eines mit PVC unverträglichen Polymers, auf 100 Gewichtsteile des PVC-Polymers und 25 bis 37 Gewichtsteile eines Polymerweichmachers auf 100 Gewichtsteile des PVC-Polymers.

Wegen der geschilderten Probleme gibt es Bemühungen, Abdeckbänder für die Zweifarblackierung aus umweltfreundlichen, problemlos verbrennbaren Folienmaterialien herzustellen. Insbesondere nahe liegend sind solche aus Polyolefinen, zum Beispiel Polyethylenen oder Polypropylenen. Generell ist die Nachstellung von Weich-PVC-Eigenschaften mit Polyolefinen schwierig, da sich diese wesentlich voneinander unterscheiden. So ist PVC ein im Wesentlichen amorphes Polymer, während die meisten Polyolefine teilkristallin sind. Die für ein Abdeckklebeband geforderte Flexibilität für eine Verklebung, die auch um Kurven herumführt, kann nicht durch dosierbare Mengen äußerer Weichmacher wie beim Weich-PVC, sondern hauptsächlich über den Kristallinitätsgrad des Polyolefins oder der Polyolefinmischung eingestellt werden.

Die Lacktrocknungstemperaturen von bis zu 150 °C erfordern in der Regel die Anwesenheit eines Polypropylens, da Polyethylene bei maximal 140 °C schmelzen und dann im geschmolzenen Zustand und beim Rekristallisieren beim Erkalten stark schrumpfen.

Ein solcher Ansatz ist in EP 0 823 467 B1 beschrieben, bei dem die Folie aus einer Polymerlegierung aus einem Polypropylen und einem Olefincopolymer aufgebaut ist

Zu einem guten Handling eines Abdeckklebebandes für die Zweifarblackierung gehört das leichte Quereinreißen von Hand, da die Maskierungen vielfach von Hand vorgenommen werden. Werkzeuge zum Ablängen, zum Beispiel Scheren oder Schneidmesser, sind nicht erwünscht, da die Gefahr von Verletzungen und Beschädigungen besteht und das Greifen von Werkzeug Zeitverluste mit sich bringt. Viele Polyolefinfolien sind schlecht quereinreißbar, da sie sehr duktil sind. Zwar lassen sich einige Polyolefine durch Legieren (Blending) oder Füllen mit mineralischen Füllstoffen besser quereinreißbar einstellen, sie neigen dann aber zum leichten Abreißen beim Abziehen der Abdeckbänder nach Gebrauch.

Aus der US 2004/0086707 A1 ist ein Klebeband bekannt, das einen Folienträger aufweist. Die Folie besteht aus einer Mischung aus
- 100 Gewichtsteile eines Polypropylen
- 1 bis 70 Gewichtsteile eines Polyethylens
- 1 bis 200 Gewichtsteile eines anorganischen Füllers und
- 0,1 bis 50 Gewichtsteile eines Haftvermittlers.

Die Folie ist in Längsrichtung um den Faktor 1,05 bis 3 gedehnt.

Optional wird ein Vernetzer hinzugefügt, und die Folie anschließend einer Elektronenstrahlvernetzung unterzogen, wobei die Strahlungsdosis kleiner 2,5 MGy ist. In den Beispielen wird mit 1 MGy bestrahlt.

Die Bestrahlung dient hierbei der Verbesserung der Temperaturbeständigkeit des Klebebands, wie den Erläuterungen zu den Beispielen 3, 4 und 11 zu entnehmen ist.

Die US 2005/0287361 A1 offenbart ein Isolierband, das um Kabel gewickelt wird und dauerhaft auf diesen verbleibt. Der Träger des Klebebands besteht aus einer halogenfreien Polymerfolie auf Polyolefinbasis.

Aus der WO 2005/037906 A1 ist eine gefüllte, weiche halogenfrei flammwidrige Wickelfolie aus einem Polyolefin und Magnesiumhydroxid mit (gegebenenfalls unregelmäßig) kugeliger Struktur und einer Teilchengröße im µm-Bereich, vorzugsweise durch Mahlung hergestellt, bekannt. Als Polyolefin findet insbesondere ein Polypropylenelastomer mit niedrigem Biegemodul, Verwendung, wobei die Dicke der Wickelfolie 30 bis 200 µm und insbesondere 50 bis 130 µm beträgt.

Die WO02/086005 A1 beschreibt ein temperaturstabiles Klebeband mit einem vernetzen Ethylenpolymerträger, wobei eine Elektronenstrahlvernetzung vermieden wird.

Aufgabe der vorliegenden Erfindung ist es, eine Folie zur Verfügung zu stellen, die als Trägerfolie beispielsweise in einem Abdeckklebeband für die Zweifarblackierung, insbesondere für die Lackierung von Kunststoffanbauteilen geeignet ist, und die die von einschlägigen Folien bekannten Nachteile des Standes der Technik nicht oder nicht in dem Maß aufweist. Insbesondere soll ein mit der Folie erzeugtes Abdeckklebeband umweltfreundlich verbrennbar, einsetzbar für Lacktrocknungstemperaturen von bis zu 150 °C und leicht von Hand quereinreißbar sein.

Gelöst wird diese Aufgabe durch die Verwendung einer Folie, wie sie im Hauptanspruch niedergelegt ist. Gegenstand der Unteransprüche sind dabei vorteilhafte Weiterbildungen der Folie.

Demgemäß betrifft die Erfindung die Verwendung einer halogenfreien Folie aus Polyolefinen in einem einseitig klebend ausgerüsteten Abdeckband, das vorzugsweise in der Zweifarblackierung von Kunststoffanbauteilen eingesetzt wird, wobei die Folie aus einer Mischung aus einem Polypropylen oder einem Polypropylencopolymer und aus einem weiteren Polymer, gewählt aus der Gruppe der Polyethylene oder Copolymere des Ethylens, besteht, die Folie vor der oder nach der Beschichtung mit der Klebemasse mit Elektronenstrahlen mit einer Dosis zwischen 5 und 100 kGy (Kilogray) bestrahlt wird und der Gewichtsanteil an Polypropylen oder Polypropylencopolymer mindestens 20 %, bezogen auf die Gesamtheit der Polyolefine beträgt.

Gemäß einer bevorzugten Ausführungsform der Erfindung ist das weitere Polymer ein Ethylen-Styrol-Copolymer oder ein Copolymer von Ethylen mit polaren Comonomeren wie Acrylsäure, Vinylacetat oder Maleinsäureanhydrid.

Der Gewichtsanteil an Polypropylen oder Polypropylencopolymer beträgt gemäß einer vorteilhaften Ausführungsform der Erfindung mindestens 40 % bezogen auf die Gesamtheit der Polyolefine.

Weiter vorzugsweise beträgt der Gewichtsanteil an Polypropylen oder Polypropylencopolymer höchstens 90 %, besonders vorzugsweise höchstens 80 %, ganz besonders vorzugsweise höchstens 70 % bezogen auf die Gesamtheit der Polyolefine.

Besonders bevorzugt als Polypropylenkomponente sind Polypropylenblockcopolymere.

Die Elektronenstrahldosis, mit der die Folie bestrahlt wird, beträgt zwischen 5 und 100 kGy (Kilogray), bevorzugt zwischen 10 und 60 kGy.

Die Polyolefine, die nicht Polypropylen oder Polypropylencopolymer darstellen, sind beispielsweise Polyethylen oder Copolymere des Ethylens. Die Copolymere des Ethylens bestehen aus Ethylen und einer mit Ethylen copolymerisierbaren Monomerkomponente. Die mit Ethylen copolymerisierbare Monomerkomponente ist vorzugsweise ein α-Olefin der Formel CH₂=CHR¹, wobei R¹ eine aliphatische Gruppe oder eine aromatische Gruppe mit 1 bis 8 Kohlenstoffatomen ist.

Die erfindungsgemäße Folie besteht aus Polyolefinen. Zur Erzielung einer ausreichenden Temperaturbeständigkeit im Sinne einer Dimensionsstabilität bei Temperaturen bis zu 150 °C enthält die Folie Polypropylen als Homopolymer oder Polypropylencopolymere wie random-Polypropylencopolymere, in denen ein Comonomer statistisch über die Kette verteilt ist. Typischerweise wird dafür Ethylen eingesetzt. Typische random-Copolymere von Polypropylen enthalten ca. 2 bis 10 Molprozent Ethylen. Im weiteren Sinn zählen auch Ethylenpropylencopolymere (EPM) mit Molverhältnissen von ca. 30 zu 70 bis ca. 70 zu 30 Molprozent zu den random-Copolymeren. Im noch weiteren Sinn gehören dazu auch Tercopolymere von Ethylen, Propylen und Dienen wie etwa Ethylidennorbornen, Dicyclopentadien oder 1,4-Cycloocadien (EPDM).

Als Comonomer zu Propylen werden ebenfalls eingesetzt α-Olefine der Formel CH₂=CHR¹, wobei R¹ eine aliphatische Gruppe mit 2 bis 8 Kohlenstoffatomen ist, darunter 1-Buten, 1-Hexen, 1-Octen oder 4-Methyl-1-penten.

Eine andere Klasse von Polypropylencopolymeren sind die Blockcopolymere, auch als heterophasige Polypropylene bezeichnet, bei denen sich Sequenzen von Propylenhomopolymer mit Sequenzen von random-Polypropylenethylencopolymer abwechseln. Der Elastizitätsmodul der Polypropylenblockcopolymere liegt zwischen denen der Propylenhomopolymere und der random-Polypropylencopolymere.

Die Polypropylene sind legiert mit weiteren Polyolefinen. Insbesondere geeignet sind solche aus der Gruppe der Polyethylene. Diese umfasst Homopolymere des Ethylens wie Hochdruckpolyethylen (LDPE) und Niederdruckpolyethylen (HDPE), aber auch die Copolymere des Ethylens, besonders die mit α-Olefinen wie 1-Buten, 1-Hexen, 1-Octen (je nach Anteil und Herstellungsverfahren LLDPE, VLDPE oder ULDPE oder Metallocen-PE genannt), aber auch Ethylen-Styrol-Copolymere und Copolymere von Ethylen mit polaren Comonomeren wie Acrylsäure, Vinylacetat oder Maleinsäureanhydrid.

Die Herstellung solcher Folien erfolgt mit den einschlägig bekannten Verfahren wie dem Chillrollverfahren, bei dem die aus einer Breitschlitzdüse austretende Schmelze auf eine Kühlwalze gegossen wird, auf der die Schmelze zu einem Film erstarrt. Weiterhin verbreitet ist das Blasfolienverfahren, bei dem die Schmelze schlauchförmig aus einer Ringdüse austritt und mehr oder weniger stark aufgeblasen wird, um die gewünschten Dimensionen (Dicke und Durchmesser) des Schlauches zu erzielen.

Die Schmelze wird in Extrudern aus Kunststoffgranulaten erzeugt. Ein Extruder besteht aus einer Schnecke, die sich in einem temperierbaren Mantel dreht. Am hinteren Ende der Schnecke wird das Granulatgemisch eingezogen, durch äußere Beheizung aufgeschmolzen und unter Scherung zum Ende des Extruders befördert, wobei je nach Ausgestaltung der Schnecke eine intensive Durchmischung der verschiedenen Komponenten erzeugt wird. Eine Schnecke besteht zu diesem Zweck aus mehreren Zonen, zum Beispiel Einzugs-, Kompressions-, Meteringzone mitunter mit Scherteil, Dekompressions- und Austragszone, letztere ebenfalls häufig mit Mischteil. Die Schraubenbewegung der Schmelze in der Schnecke erzeugt in Richtung des vorderen Endes einen Druck, der für den Austrag der Schmelze in die oben beschriebenen Düsen sorgt.

Für eine besonders intensive Durchmischung bieten sich Doppelschneckenextruder an, in den sich zwei Schnecken gleich- oder gegensinnig drehen und dadurch eine besonders gute Durchmischungswirkung entfalten.

Für die oben beschriebene Verarbeitung von Polyolefinen sind gewisse Grenzen von Schmelzviskositäten notwendig. Etabliert ist die Angabe als Schmelzindex "Melt Flow Ratio" (MFR) gemäß ISO 1133. Für Polyethylene werden diese meistens angegeben in g/10 min bei 190 °C und einem Gewicht von 2,16 kg, für Polypropylene entsprechend, allerdings bei einer Temperatur von 230 °C. Besonders geeignet für die Herstellung der Folie des erfindungsgemäßen Abdeckbandes sind Polyolefine mit einem MFR unter den oben genannten Bedingungen von 0,5 bis 15 g/10 min (190 °C/2,16 kg bei Polyethylenen oder 230 °C/2,16 kg bei Polypropylenen).

Zur Erzielung von speziellen Folieneigenschaften kann die Folienrezeptur mit Additiven erweitert werden. Darunter fallen zum Beispiel Füllstoffe wie Kreide, Talkum oder Titandioxid oder Alterungsschutzmittel zum Beispiel auf Basis von Aminen oder Phenolen, auch in Kombination mit sekundären Antioxidantien wie Phosphiten und Sulfiten. Weiterhin können Lichtschutzmittel auf Basis sterisch gehinderter Amine (HALS) oder UV Absorber, darunter Benzotriazole und Benzophenone vorteilhaft sein. Um zersetzungskatalytische Metalle abzufangen, können Metalldesaktivatoren vorteilhaft sein, darunter Hydrazine und Hydrazide.

Für die optische Gestaltung sind Farbstoffe oder Farbpigmente einzusetzen, auch in Verbindung mit Füllstoffen, um farbige Transparenz, Transluzenz oder deckende Farbigkeit zu erzielen.

Gleitmittel und Antiblockmittel wie Erucamid, Oleamid, Glycerylmonostearat, aber auch Säurefänger wie Calciumstearat und andere Metallseifen können eingesetzt werden, solange sie nicht die Klebeigenschaften der Selbstklebemasse durch Migration oder Abstempeln von der Maskierbandrückseite auf die Selbstklebemasse beeinträchtigen.

Die Reißdehnung der erfindungsgemäßen Folie beträgt gemäß einer vorteilhaften Weiterbildung mehr als 100 % (Zuggeschwindigkeit: 300 mm pro Minute, Temperatur: 23 ± 1 °C, relative Luftfeuchtigkeit: 50 ± 5 %) und/oder die Zugspannung bei 1 % Dehnung 1 bis 10 N/cm, bevorzugt 1,5 bis 6 N/cm.

Die Folie kann in einer weiteren Fortbildung der Erfindung mehrschichtig ausgeführt sein, entweder durch Coextrusion oder durch Heißkaschieren oder Laminieren mit einem Kaschierkleber. Auch eine Beschichtung der Folie mit einem andersartigen Polymer wie Polyamid, Polyester oder einem Polyethylen zur Modifizierung von Gleit- oder optischen Eigenschaften ist vom Erfindungsgedanken umfasst.

Weiter bevorzugt ist die Folie unverstreckt. Gemäß einer weiteren vorteilhaften Ausführungsform sind der Folie keine Vernetzer zugesetzt.

Die Folie ist zumindest einseitig mit einer Klebemasse, bevorzugt Selbstklebmasse beschichtet.

Als Selbstklebemasse eignen sich im Prinzip alle gängigen haftklebrigen Systeme. Darunter fallen harzabgemischte Naturkautschukselbstklebemassen, Acrylsäureestercopolymerisate (mit und ohne Zusatz von Klebharzen), Synthesekautschukmassen (zum Beispiel auf Basis von Butylkautschuk, Polyisobutylen, Styrol-Butadien-Copolymeren, hydrierten und nicht hydrierten Styrolblockcopolymeren, Ethylen-Propylen Copolymeren, amorphen Poly-α-olefinen, Polyethylenvinylacetatcopolymeren oder Acrylatblockcopolymere), Polyurethanhaftklebemassen und/oder Siliconhaftklebemassen.

Die Selbstklebemassen können aus Lösung, aus der Schmelze oder - sofern so erhältlich - als wässrige Dispersion mit geeigneten Beschichtungshilfsmitteln auf die Polyolefinfolie aufgetragen werden.

Besonders geeignet sind sehr kohäsive Selbstklebemassen mit Schälkräften von Stahl von 1 bis 8 N/cm gemäß AFERA 5001, Methode A.

Die Auftragsstärken der Selbstklebemassen betragen vorzugsweise 5 bis 100 g/m², weiter bevorzugt 8 bis 50 g/m².

Alle Klebmassen können mit Weichmachern, Klebharzen oder anderen Additiven wie Alterungsschutzmitteln und Füllstoffen abgemischt sein.

Die Verankerung der Selbstklebemasse kann durch eine Beschichtung mit einem Primer als Verankerungshilfe verbessert werden. Dazu kann auch eine Corona- oder eine Flammvorbehandlung der zu beschichtenden Folienseite dienen.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Wahlweise kann das Abdeckband als Stanzling auf einem Trennpapier oder einer Trennfolie (das sind typischerweise mit Silikonen beschichtete Papiere oder Kunststofffolien) dargereicht sein.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge und dergleichen.

Die Beschichtung des Trägers mit Primer und/oder Rückseitenlack erfolgt mit gängigen Beschichtungsverfahren wie Rakel- oder Walzenauftrag, Sprüh- oder Gießverfahren. Die Selbstklebemasse kann auch im Transferverfahren auf den Träger gebracht werden, bei dem die Klebmasse auf einen abhäsiv ausgerüsteten Hilfsträger beschichtet und im getrockneten Zustand zum Träger zukaschiert wird.

Die erfindungsgemäße Folie ist als Trägerfolie in einem Abdeckband, das für die Zweifarblackierung von Kunststoffanbauteilen Verwendung finden kann, sehr gut geeignet.

Die bekannten Folien sind in der Regel nicht gut von Hand quereinreißbar. Die Forderung an ein Abdeckband für die Zweifarblackierung von Kunststoffanbauteilen ist eine mühelose Quereinreißbarkeit von Hand, damit der Maskierprozess zum einen zügig vonstatten geht, zum anderen kein Werkzeug verwendet werden muss.

Um dieses zu erreichen, wird entweder die erfindungsgemäße Folie vor der weiteren Beschichtung oder aber das bereits mit Selbstklebemasse beschichtete Klebe- oder Abdeckband mit Elektronenstrahlen bestrahlt. Dazu wird die Folie oder das Abdeckband in einer Einzellage an einer Elektronenquelle vorbeigeführt, aus der beschleunigte Elektronen mit einer kinetischen Energie von ca. 10⁵ bis 10⁷ Elektronenvolt austreten. Für die Bestrahlung von dünnen Schichten wie Folien werden typischerweise Energien bis zu 300 Kiloelektronenvolt (keV) angewendet. Die Erzeugung der beschleunigten Elektronen geschieht in Elektronenbeschleunigern, zum Beispiel Scanningbeschleuniger, die ähnlich einer Fernsehröhre arbeiten, oder in anderen Bauarten wie Linearkathodenbeschleuniger oder Segmentkathodenbeschleuniger. Für die Wirkung auf die Folie oder das Abdeckband ist die absorbierte Strahlendosis ausschlaggebend. Ihre SI Einheit ist Gray (Gy) oder J/g, hat also die Dimension einer Energiedichte. Eine weitere wichtige Größe ist die Eindringtiefe, die eine Funktion der kinetischen Energie, also der Beschleunigungsspannung des Elektronenbeschleunigers ist.

Die in die Materialbahn einschlagenden Elektronen mit den beschriebenen kinetischen Energien brechen chemische Bindungen unter Bildung von Radikalen auf. Diese rekombinieren entweder mit anderen Radikalen oder werden durch Umlagerungsreaktionen eliminiert. Werden die Radikale an der Hauptkette von Polymeren gebildet, entscheidet die Reaktionskinetik der Rekombinationsreaktion in Konkurrenz zu einer Umlagerung unter Spaltung der Polymerhauptkette darüber, ob es zu einer Vernetzung des Polymers oder zum Molekulargewichtsabbau kommt.

Die Quereinreißbarkeit von Hand kann im erfindungsgemäßen Sinn verbessert werden bei Strahlendosen von 5 bis 100 Kilogray (kGy), wobei die zu verwendende Dosis abhängt von dem Grad der gewünschten Einreißbarkeit, der Folienrezeptur und der Foliendicke.

Überraschenderweise führt die Bestrahlung der Folie der oben beschriebenen Zusammensetzung beziehungsweise des damit hergestellten Abdeckbandes mit Elektronenstrahlen der Dosis 5 bis 100 kGy zu einer verbesserten Quereinreißbarkeit von Hand, ohne die Zugfestigkeiten, die für ein funktionelles Abdeckband beim Anpassen an kurvige Verklebungsgeometrien und beim Demaskieren nach der Anwendung wichtig sind, maßgeblich zu beeinträchtigen. Die Risskante fällt dabei ebenmäßiger aus, als ohne Bestrahlung mit Elektronenstrahlen.

Die Reißdehnung des erfindungsgemäßen Trägers beträgt vorzugsweise mehr als 100 % (Zuggeschwindigkeit: 300 mm pro Minute, Temperatur: 23 ± 1 °C, relative Luftfeuchtigkeit: 50 ± 5 %), damit es beim Dehnen zur Anpassung an gekrümmte Verklebungsgeometrien und beim Abziehen nicht zu Abrissen des Abdeckbandes kommt. Die Zugspannung bei 1 % Dehnung ist vorzugsweise 1 bis 10 N/cm, weiter bevorzugt 1,5 bis 6 N/cm, um eine leichte Verarbeitbarkeit bei der Anpassung an Kurven und ein gute Anschmiegsamkeit auf den Haftgrund zu gewährleisten.

Das Klebeband mit der erfindungsgemäßen Folie wird vor der Verwendung üblicherweise von einer Rolle abgewickelt. Es kann von Hand leicht quer und mit einer geraden Risskante in der erforderlichen Länge abgerissen und auf das zweifarbig zu lackierende Teil entlang der gewünschten Lackkante aufgebracht werden. Alternativ wird ein Stanzling vom Trennmedium (Trennfolie oder Trennpapier) abgezogen und platziert. Das Band schmiegt sich dabei durch leichtes Andrücken gut an die Konturen des Bauteils an, auch durch Vertiefungen hindurch oder um Kurven herum. Die Maskierung kann durch großflächige Klebefolien oder nicht klebende flächige Materialien wie Kunststoff- oder Metallfolien oder Papier ergänzt werden. Das Bauteil kann zusammen mit der Maskierung gereinigt und durch einen Primer oder eine Vorbehandlung mit offener Flamme für die Lackierung vorbereitet werden. Der Lackaufbau, meistens mehrschichtig, wird in der Regel automatisiert aufgesprüht und in Trockeinrichtungen bis zu einer Stunde bei bis zu 150 °C vom Lösemittel befreit. Nach dem Abkühlen wird die Maskierung entfernt. Dabei kommt es zu keinen Selbstklebemasserückständen hervorgerufen durch Schrumpf und zu keinem Abreißen des Trägers. Auf die Rückseite des Abdeckbandes gesprühter Lack platzt beim Demaskieren nicht ab.

Das erfindungsgemäße Abdeckband wird nachfolgend weiterhin in bevorzugter Ausführung anhand mehrerer Beispiele beschrieben, ohne damit ebenfalls die Erfindung irgendeiner Beschränkung unterwerfen zu wollen.

Des Weiteren sind Vergleichsbeispiele aufgeführt, in denen untaugliche Abdeckbänder dargestellt sind.

### Beispiele

Im Folgenden bedeuten Teile jeweils Gewichtsteile.

### Beispiel 1

An einer Laborfoliencastanlage wurde ein Film bestehend aus 60 Teilen eines Polypropylenblockcopolymers mit einem MFR von 5,0 g/10 min (230 °C; 2,16 kg) und einem Schmelzpunkt von ca. 160 °C und 40 Teilen eines Low Density Polyethylens mit einem MFR von 2,0 g/10 min (190 °C; 2,16 kg) und einer Dichte von 927 kg/m³ zusammen mit 0,4 Teilen eines primären Antioxidans (Irganox 1010, Ciba) in einer Stärke von 90 µm und einer nutzbaren Breite von 40 cm extrudiert.

Dieser Film wurde an einer Pilotanlage einseitig mit einer Coronaentladung auf eine Oberflächenenergie von 48 mN/m vorbehandelt und dann mit der Lösung eines Acrylsäureestercopolymers als Selbstklebemasse so beschichtet, dass ein Masseauftrag von 25 g/m² resultierte. Die Selbstklebemasse war ein Polymerisat aus 40 Teilen Butylacrylat, 40 Teilen 2-Ethylhexylacrylat, 12 Teilen Vinylacetat, 4,5 Teilen Methylacrylat, 3 Teilen Acrylsäure und 0,5 Teilen Aluminiumacetylacetonat.

Der Film wurde in einer ESH-Anlage unter Stickstoffatmosphäre mit einer Beschleunigungsspannung von 200 kV und einer Dosis von 35 kGy bestrahlt und anschließend zu einer Rolle in voller Bahnbreite gewickelt.

Aus der Rolle in voller Bahnbreite wurden mit einem Kreismesser schmale Rollen im Abstechschnittverfahren für die Tests abgeschnitten.

### Beispiel 2

Wie Beispiel 1, in Abweichung dazu wurden für die Folie 50 Teile eines Polypropylenhomopolymers mit einem MFR von 8,0 g/10 min (230 °C; 2,16 kg) und einem Schmelzpunkt von ca. 164 °C und 50 Teilen eines Low Density Polyethylens mit einem MFR von 2,0 g/10 min (190 °C; 2,16 kg) verwendet.

### Beispiel 3

Wie Beispiel 2, in Abweichung dazu wurde die beschichtete Folie mit einer ESH-Dosis von 80 kGy bestrahlt.

### Beispiel 4

Wie Beispiel 1, in Abweichung dazu wurden für die Folie 50 Teile eines Polypropylenblockcopolymers mit einem MFR von 5,0 g/10 min (230 °C; 2,16 kg) und einem Schmelzpunkt von ca. 160 °C, 25 Teile eines Low Density Polyethylens mit einem MFR von 2,0 g/10 min (190 °C; 2,16 kg) und einer Dichte von 927 kg/m³, 20 Teile eines Linear Low Density Polyethylens mit 1-Buten als Comonomer mit einem MFR von 1,2 g/10 min (190 °C; 2,16 kg) und einer Dichte von 919 kg/m³ sowie 5 Teile Talkum verwendet.

### Beispiel 5

Wie Beispiel 1, in Abweichung dazu wurden die 60 Teile Polypropylenblockcopolymer durch 40 Teile Polypropylenhomopolymer mit einem MFR von 8,0 g/10 min (230 °C; 2,16 kg) und einem Schmelzpunkt von ca. 164 °C und 20 Teile Polypropylenrandomcopolymer mit einem MFR von 1,9 g/10 min (230 °C; 2,16 kg) und einem Schmelzpunkt von ca. 145 °C ersetzt.

### Beispiel 6

Wie Beispiel 1, in Abweichung dazu wurde die Folie vor dem Beschichten mit Klebmasse durch die ESH-Anlage gefahren und mit Elektronen bestrahlt.

### Gegenbeispiele

### Gegenbeispiel 1

Wie Beispiel 1, in Abweichung dazu setzte sich die Folie aus 40 Teilen eines Low Density Polyethylens mit einem MFR von 2,0 g/10 min (190 °C; 2,16 kg) und einer Dichte von 927 kg/m³ und 60 Teilen eines Linear Low Density Polyethylens mit 1-Buten als Comonomer mit einem MFR von 1,2 g/10 min (190 °C; 2,16 kg) und einer Dichte von 919 kg/m³ zusammen.

### Gegenbeispiel 2

Wie Beispiel 1, in Abweichung dazu bestand die Folie aus 40 Teilen eines Polypropylenhomopolymers mit einem MFR von 8,0 g/10 min (230 °C; 2,16 kg) und einem Schmelzpunkt von ca. 164 °C und 60 Teilen Polypropylenrandomcopolymer mit einem MFR von 1,9 g/10 min (230 °C; 2,16 kg) und einem Schmelzpunkt von ca. 145 °C

### Gegenbeispiel 3

Wie Beispiel 1, in Abweichung dazu wurde die beschichtete Folie nicht mit ESH-Strahlung bestrahlt.

### Gegenbeispiel 4

Wie Beispiel 6, in Abweichung dazu wurde die ESH-Bestrahlung weggelassen.

### Gegenbeispiel 5

Wie Beispiel 1, in Abweichung dazu wurde mit 130 kGy ESH-Dosis bestrahlt.

### Prüfkriterien

Als entscheidende Prüfkriterien zur Beurteilung der Eignung eines Abdeckbandes für die Zweifarblackierung von Kunststoffteilen mit halogenfreiem Träger wurden herangezogen:
- Schälkraft von Kunststoffteil
- Quereinreißbarkeit von Hand
- Wärmeschrumpf im verklebten Zustand
- Demaskierbarkeit nach Überlackierung und Lacktrocknung
- Kontur der Lackkante

### Durchführung der Prüfungen

### Schälkraft von Kunststoffteil

Die Schälkraftmessung wurde analog der AFERA Prüfmethode 5001, Methode A durchgeführt. Anstatt einer Stahlplatte wurde als anwendungsrelevanter Haftgrund eine PP-Kunststoffplatte mit einer geprägten Oberfläche der Rauhigkeit R_{z} = 50 µm verwendet. Die Platte wurde vor der Verwendung mit Methylethylketon gereinigt.

### Quereinreißbarkeit von Hand

Streifen der Beispielmuster von 15 mm Breite wurden von drei Testpersonen quer zur Maschinenrichtung (aus Sicht der Folienextrusion) jeweils zehn mal von Hand eingerissen, respektive versucht einzureißen. Es wurde der Mittelwert der insgesamt dreißig subjektiven Bewertungen pro Beispielmuster ermittelt. Als Bewertungsschema für den Grad der Quereinreißbarkeit von Hand gilt:
- △ =: leicht einreißbar mit gerader Risskante
- ○ =: mäßig einreißbar mit verdehnter Risskante
- X =: schwierig bis nicht einreißbar, stark verdehnte Risskante

### Wärmeschrumpf im verklebten Zustand

Streifen der Beispielmuster von 15 mm Breite und 15 cm Länge (in Maschinenrichtung) wurden auf ein Aluminiumblech verklebt und mit einer Andruckrolle, wie in der AFERA Methode 5001 beschrieben, angedrückt. Mit einem Cutter wurden die Streifen in der Mitte senkrecht zur Längsrichtung bis auf den Aluminiumblechgrund durchgeschnitten. Anschließend erfolgte eine Wärmebelastung von einer Stunde bei 150 °C in einem Wärmeschrank. Der Schrumpf in Form der Erweiterung der Lücke wurde an dem Einschnitt wie folgt beurteilt:
- △ =: Lücke < 1 mm
- ○ =: Lücke > 1 mm
- X =: Lücke >> 1 mm und Aufstellen der Folienenden

*Demaskierbarkeit nach Überlackierung und Lacktrocknung* Streifen der Beispielmuster von 15 mm Breite und 15 cm Länge wurden auf einer glatten PP-Kunststoffplatte verklebt und mit einer Andruckrolle, wie in der AFERA Methode 5001 beschrieben, angedrückt. Die beklebten Platten wurden für 2 Sekunden mit der offenen Flamme eines Bunsenbrenners beflammt und dann mit einem Zweikomponenten-Klarlack in einer Schichtstärke von 50 µm (Evergloss 8610, FF98-0017, BASF) sprühlackiert. Die Platten wurden 25 Minuten bei 145 °C getrocknet.

Nach dem Abkühlen auf Raumtemperatur wurden die Streifen im Winkel von 90 °C demaskiert. Prüfkriterium war die Entfernbarkeit der Bandstreifen ohne Abreißen. Die Bewertung der Entfernbarkeit erfolgte nach folgendem Schema:
- △ =: kein Abreißen
- X =: gelegentliches bis häufiges Abreißen

### Kontur der Lackkante

Die unter dem Punkt *Demaskierbarkeit nach Überlackierung und Lacktrocknung* genannten PP-Platten wurden nach dem Entfernen der Bänder auf die Gleichmäßigkeit der Kontur der Lackkante mit folgenden Beurteilungskriterien überprüft:
- △ =: Sehr genaue, gleichmäßige Lackkante
- ○ =: Mäßig genaue Lackkante
- X =: Ungenaue, ungleichmäßige Lackkante

### Ergebnisse

In nachstehender Ergebnistabelle sind die Ergebnisse der Prüfungen zusammengefasst. i.O. (in Ordnung) bedeutet: das Gesamturteil ist positiv, das Muster ist anwendungsgerecht, n.i.O. (nicht in Ordnung) bedeutet: das Gesamturteil ist negativ, das Muster ist nicht anwendungsgerecht.

### Ergebnistabelle

| | **Schälkraft von Kunststoff [N/cm]** | **Quereinreißbarkeit von Hand** | **Wärmeschrumpf** | **Demaskierbarkeit** | **Kontur der Lackkante** | **Gesamturteil** |
|---|---|---|---|---|---|---|
| **Beispiel 1** | 2,2 | △ | △ | △ | △ | **i.O.** |
| **Beispiel 2** | 2,3 | △ | △ | △ | △ | **i.O.** |
| **Beispiel 3** | 2,1 | △ | △ | △ | △ | **i.O.** |
| **Beispiel 4** | 2,2 | △ | △ | △ | △ | **i.O.** |
| **Beispiel 5** | 2,4 | △ | △ | △ | △ | **i.O.** |
| **Beispiel 6** | 2,5 | △ | △ | △ | △ | **i.O.** |
| **Gegenbeispiel** 1 | 2,7 | X | X | △ | X | **n.i.O.** |
| **Gegenbeispiel 2** | 2,2 | △ | △ | X | △ | **n.i.O.** |
| **Gegenbeispiel 3** | 2,6 | X | ○ | △ | ○ | **n.i.O.** |
| **Gegenbeispiel 4** | 2,7 | X | ○ | △ | ○ | **n.i.O.** |
| **Gegenbeispiel 5** | 2,9 | △ | △ | X | △ | **n.i.O.** |

Wie aus der Ergebnistabelle hervorgeht, weisen die Bänder der Beispiele die Erfüllung der wesentlichen Testkriterien auf, die für ein Abdeckband für die Zweifarblackierung relevant sind.

Diese beispielhaften Abdeckbänder weisen eine anwendungsgerechte Schälkraft von einem typischen Kunststoffsubstrat auf, lassen sich während der Aufbringung zum Ablängen leicht mit einer glatten Risskante von Hand quer einreißen, zeigen während der Lacktrocknung keinen nennenswerten Wärmeschrumpf, lassen sich leicht und ohne Abreißen demaskieren und hinterlassen eine sehr akkurate Lackkante.

Die Freiheit von PVC ermöglicht nach Gebrauch eine unaufwändige, umweltfreundliche Entsorgung, auch durch Verbrennung, weil dabei kein toxischer Chlorwasserstoff entsteht.

## Patentansprüche

1. Verwendung einer halogenfreien Folie aus Polyolefinen als Trägerfolie in einem einseitig klebend ausgerüsteten Abdeckband, wobei die Folie aus einer Mischung aus einem Polypropylen oder einem Polypropylencopolymer und aus einem weiteren Polymer, gewählt aus der Gruppe der Polyethylene oder Copolymere des Ethylens, besteht, die Folie vor oder nach der Beschichtung mit der Klebemasse mit Elektronenstrahlen mit einer Dosis zwischen 5 und 100 kGy (Kilogray) bestrahlt wird und der Gewichtsanteil an Polypropylen oder Polypropylencopolymer mindestens 20 %, bezogen auf die Gesamtheit der Polyolefine beträgt.

2. Verwendung nach Anspruch 1, **dadurch gekennzeichnet, dass**
der Gewichtsanteil an Polypropylen oder Polypropylencopolymer mindestens 40 % bezogen auf die Gesamtheit der Polyolefine beträgt.

3. Verwendung nach Anspruch 1 oder 2,
**dadurch gekennzeichnet, dass**
als Polypropylenkomponente Polypropylenblockcopolymere verwendet werden.

4. Verwendung nach zumindest einem der Ansprüche 1 bis 3,
**dadurch gekennzeichnet, dass**
das weitere Polymer ein Ethylen-Styrol-Copolymer oder ein Copolymer von Ethylen mit polaren Comonomeren wie Acrylsäure, Vinylacetat oder Maleinsäureanhydrid ist.

5. Verwendung nach zumindest einem der vorherigen Ansprüche,
**dadurch gekennzeichnet, dass**
die Copolymere des Ethylens bestehen aus Ethylen und einer mit Ethylen copolymerisierbaren Monomerkomponente wie einem α-Olefin der Formel CH₂=CHR¹, wobei R¹ eine aliphatische Gruppe oder eine aromatische Gruppe mit 1 bis 8 Kohlenstoffatomen ist.

6. Verwendung nach zumindest einem der vorherigen Ansprüche,
**dadurch gekennzeichnet, dass**
die Polyolefine einen MFR von 0,5 bis 15 g/10 min (190 °C und 2,16 kg bei Polyethylenen, 230 °C und 2,16 kg bei Polypropylenen) aufweisen.

7. Verwendung nach zumindest einem der vorherigen Ansprüche,
**dadurch gekennzeichnet, dass**
die Reißdehnung mehr als 100 % (Zuggeschwindigkeit: 300 mm pro Minute, Temperatur: 23 ± 1 °C, relative Luftfeuchtigkeit: 50 ± 5 %) und/oder die Zugspannung bei 1 % Dehnung 1 bis 10 N/cm, bevorzugt 1,5 bis 6 N/cm beträgt.

8. Verwendung nach zumindest einem der vorherigen Ansprüche,
**dadurch gekennzeichnet, dass**
die Folie aus mehreren Schichten besteht.

9. Verwendung nach zumindest einem der vorherigen Ansprüche,
**dadurch gekennzeichnet, dass**
die Folie unverstreckt ist.

10. Verwendung nach zumindest einem der vorherigen Ansprüche,
**dadurch gekennzeichnet, dass**
der Folie keine Vernetzer zugesetzt sind.

## Claims

1. Use of a halogen-free film composed of polyolefins as a backing film in a single-sided adhesive masking tape, the film being composed of a mixture comprising a polypropylene or a polypropylene copolymer and comprising a further polymer, selected from the group of the polyethylenes or ethylene copolymers, the film, before or after coating with the adhesive, being irradiated with electron beams, with a dose between 5 and 100 kGy (kilograys), and the weight fraction of polypropylene or of polypropylene copolymer being at least 20%, based on the entirety of the polyolefins.

2. Use according to Claim 1, **characterized in that** the weight fraction of polypropylene or of polypropylene copolymer is at least 40%, based on the entirety of the polyolefins.

3. Use according to Claim 1 or 2, **characterized in that** polypropylene block copolymers are used as polypropylene component.

4. Use according to at least one of Claims 1 to 3, **characterized in that** the further polymer is an ethylene-styrene copolymer or a copolymer of ethylene with polar comonomers such as acrylic acid, vinyl acetate or maleic anhydride.

5. Use according to at least one of the preceding claims, **characterized in that** the copolymers of ethylene are composed of ethylene and of a monomer component which is copolymerizable with ethylene, such as an α-olefin of the formula CH₂=CHR¹, R¹ being an aliphatic group or an aromatic group having 1 to 8 carbon atoms.

6. Use according to at least one of the preceding claims, **characterized in that** the polyolefins have an MFR of 0.5 to 15 g/10 min (190°C and 2.16 kg in the case of polyethylenes, 230°C and 2.16 kg in the case of polypropylenes).

7. Use according to at least one of the preceding claims, **characterized in that** the breaking elongation is more than 100% (tensioning speed: 300 mm per minute, temperature: 23 ± 1°C, relative humidity: 50 ± 5%) and/or the tensile stress at 1% elongation is 1 to 10 N/cm, preferably 1.5 to 6 N/cm.

8. Use according to at least one of the preceding claims, **characterized in that** the film is composed of two or more layers.

9. Use according to at least one of the preceding claims, **characterized in that** the film is unoriented.

10. Use according to at least one of the preceding claims, **characterized in that** no crosslinkers have been added to the film.

## Revendications

1. Utilisation d'un film à base de polyoléfines, exempt d'halogène, en tant que film de support dans un ruban de masquage muni d'un côté collant, le film étant constitué d'un mélange d'un polypropylène ou d'un copolymère de polypropylène et d'un autre polymère choisi dans le groupe des polyéthylènes ou copolymères de l'éthylène, le film étant irradié, avant ou après l'enduction avec la matière collante, avec des faisceaux d'électrons à une dose comprise entre 5 et 100 kGy (kilograys) et la teneur pondérale en polypropylène ou copolymère de polypropylène étant d'au moins 20 %, par rapport à la totalité des polyoléfines.

2. Utilisation selon la revendication 1, **caractérisée en ce que** la teneur pondérale en polypropylène ou copolymère de polypropylène est d'au moins 40 %, par rapport à la totalité des polyoléfines.

3. Utilisation selon la revendication 1 ou 2, **caractérisée en ce qu'**on utilise comme composant polypropylène des copolymères séquencés de polypropylène.

4. Utilisation selon au moins l'une des revendications 1 à 3, **caractérisée en ce que** l'autre polymère est un copolymère éthylène/styrène ou un copolymère d'éthylène avec des comonomères polaires tels que l'acide acrylique, l'acétate de vinyle ou l'anhydride maléique.

5. Utilisation selon au moins l'une des revendications précédentes, **caractérisée en ce que** les copolymères de l'éthylène consistent en éthylène et en un composant monomère copolymérisable avec l'éthylène, tel qu'une α-oléfine de formule CH₂=CHR¹, R¹ étant un groupe aliphatique ou un groupe aromatique ayant de 1 à 8 atomes de carbone.

6. Utilisation selon au moins l'une des revendications précédentes, **caractérisée en ce que** les polyoléfines présentent un indice de fluidité à chaud MFR de 0,5 à 15 g/10 min (190 °C et 2,16 kg pour les polyéthylènes, 230 °C et 2,16 kg pour les polypropylènes).

7. Utilisation selon au moins l'une des revendications précédentes, **caractérisée en ce que** l'allongement à la rupture est supérieur à 100 % (vitesse de traction : 300 mm par minute, température : 23 ± 1 °C, humidité relative de l'air : 50 ± 5 %) et/ou la contrainte de traction pour un allongement de 1 % vaut de 1 à 10 N/cm, de préférence de 1,5 à 6 N/cm.

8. Utilisation selon au moins l'une des revendications précédentes, **caractérisée en ce que** le film est constitué de plusieurs couches.

9. Utilisation selon au moins l'une des revendications précédentes, **caractérisée en ce que** le film est non étiré.

10. Utilisation selon au moins l'une des revendications précédentes, **caractérisée en ce qu'**aucun agent de réticulation n'est ajouté au film.
